# EUROPÄISCHE PATENTSCHRIFT

(11) **EP 3 669 848 B1**
(45) Veröffentlichungstag und Bekanntmachung des Hinweises auf die Patenterteilung: **09.11.2022**
(21) Anmeldenummer: 19216201.4
(22) Anmeldetag: 13.12.2019
(51) Int. Cl.: A61G 3/08, B60P 3/079, B60P 7/08, B60R 22/38

(54) **RETRAKTOR-RÜCKHALTESYSTEM, VERFAHREN UND VERWENDUNG EINES SOLCHEN, INSBESONDERE ZUR SICHERUNG VON ROLLSTÜHLEN IN FAHRZEUGEN**
RETRACTOR RESTRAINT SYSTEM, METHOD AND USE OF SUCH A SYSTEM, IN PARTICULAR FOR SECURING WHEELCHAIRS IN VEHICLES
SYSTÈME DE RETENUE DE RÉTRACTEUR, PROCÉDÉ ET UTILISATION D'UN TEL SYSTÈME DE RETENUE DE RÉTRACTEUR, EN PARTICULIER PERMETTANT DE FIXER DES FAUTEUILS ROULANTS DANS DES VÉHICULES

(30) Priorität: 19.12.2018 DE 202018107283 U
(43) Veröffentlichungstag der Anmeldung: 24.06.2020
(73) Patentinhaber: Bruns Holding GmbH & Co. KG, 26689 Apen (DE)
(72) Erfinder: Bruns, Gerit, 26160 Bad Zwischenahn (DE)
(74) Vertreter: Eisenführ Speiser

(56) Entgegenhaltungen:
- GB-A- 2 527 120
- JP-A- 2009 101 125
- US-A1- 2003 190 208
- US-A1- 2004 026 981

## Beschreibung

Die Erfindung betrifft ein Retraktor-Rückhaltesystem, insbesondere zur Sicherung von Rollstühlen und/oder Personen in Fahrzeugen, umfassend: ein Gehäuse, eine in einer positiven und negativen Drehrichtung drehbar an dem Gehäuse gelagerte Retraktor-Spule zum Aufnehmen eines mit einem Rollstuhl koppelbaren Gurtbandes, wobei das Gurtband durch eine Rotation der Spule in der positiven Drehrichtung aufwickelbar und durch eine Rotation der Spule in der negativen Drehrichtung abwickelbar ist, eine Arretierungseinheit zum Arretieren der Spule gegen eine Rotation in negativer Drehrichtung in einem Betriebszustand des Retraktor-Rückhaltesystems, und eine an dem Gehäuse angeordnete Klemmeinheit zum lösbaren Festklemmen des von der Spule abgewickelten Gurtes, und ein Auslösemechanismus zur Betätigung der Klemmeinheit.

Retraktor-Rückhaltesysteme der eingangs genannten Art sind allgemein bekannt. Sie werden genutzt um Rollstühle und/oder Personen in Fahrzeugen zu sichern. Dabei wird ein solches Retraktor-Rückhaltesystem am Fahrzeugboden bzw. an der Fahrzeugwand befestigt, wobei das distale Ende des auf der Spule aufgewickelten Gurtbandes mit einem Rollstuhl oder einem Gurtschloss koppelbar ist.

Zur Sicherung von Person und Rollstuhl können ferner zwei oder mehr Retraktor-Rückhaltesysteme der eingangs genannten Art verwendet werden, deren distale Enden jeweils mit einem Gurtschloss zur Personensicherung bzw. dem Rollstuhl der zu sichernden Person gekoppelt werden können.

Bei der Sicherung von Rollstühlen in Fahrzeugen bestehen dabei besondere Herausforderungen aufgrund der erforderlichen Länge der Gurtbänder. Insbesondere die Gurtbänder der Retraktor-Rückhaltesysteme, welche am vorderen Teil des Rollstuhls befestigt werden, weisen häufig eine Länge von mindestens 3 Metern, vorzugsweise sogar bis zu 4 Metern auf. Diese Länge ist erforderlich, um die Gurtbänder derart weit von der Gurtbandrolle abwickeln zu können, dass ein Rollstuhl außerhalb des Fahrzeugs mit dem Gurtband gekoppelt werden kann, da der vordere Bereich des Rollstuhls im Fahrzeug häufig nicht zugänglich ist.

Auf solche Retraktor-Rückhaltesysteme, wie beispielsweise vordere Retraktor-Rückhaltesysteme zur Sicherung von Rollstühlen, wirken bei einem Unfall mit Heckaufprall sowie beim Rebound infolge eines Frontallaufpralls große Kräfte und Beschleunigungen.

Es kann ferner auch während der Beförderung eines zu sichernden Rollstuhls in das Fahrzeug durch ein unbeabsichtigtes Loslassen des Rollstuhls zu einem Zurückschnellen des Rollstuhls kommen, sodass Kräfte auf das Retraktor-Rückhaltesystem wirken.

Insbesondere bei sehr langen Gurtbändern, aber auch bei kürzeren Gurtbändern, wie sie zur Sicherung von Personen genutzt werden, besteht dabei ein erhebliches Sicherheitsrisiko durch eine vergleichsweise hohe absolute Gurtbanddehnung. Durch die vorstehend beschriebenen Kräfte und Beschleunigungen wirkt ferner ein negatives Drehmoment auf die Retraktor-Spule, welches im arretierten Zustand der Retraktor-Spule zum sogenannten Filmspuleneffekt führt. Dieser beschreibt ein Zusammenziehen des auf der Retraktor-Spule aufgewickelten Gurtbandes sowie dessen axiale Dehnung, sodass das Gurtband insbesondere im Falle eines Unfalls in erheblichem Maße nachgibt und die Sicherheit der Insassen gefährdet.

Dieses Nachgeben des Retraktor-Rückhaltesystems ist im Falle eines Unfalls, aber auch bei der Beförderung des Rollstuhls in das Fahrzeug, sowohl aus Gründen des Komforts als auch der Sicherheit des Rollstuhlfahrers bzw. einer Person zu vermeiden.

GB 2527120 A offenbart ein Rückhaltesystem für Rollstühle. US 2004/0026981 A1 offenbart ein Sitzgurtsystem.

Dementsprechend liegt der Erfindung die Aufgabe zu Grunde, ein verbessertes Retraktor-Rückhaltesystem anzugeben. Insbesondere liegt der Erfindung die Aufgabe zu Grunde, ein Retraktor-Rückhaltesystem mit erhöhter Sicherheit und verbesserter Handhabung bei der Sicherung von Rollstühlen und/oder Personen anzugeben.

Die Erfindung löst die ihr zu Grunde liegenden Aufgabe bei einem Retraktor-Rückhaltesystem der eingangs bezeichneten Art, dadurch, dass der Auslösemechanismus derart mit der Arretierungseinheit und der Spule koppelbar ist, dass die Klemmeinheit betätigt wird, wenn auf die Spule ein Drehmoment in negativer Drehrichtung wirkt und die Spule durch die Arretierungseinheit arretiert ist.

Somit schlägt die Erfindung vor, dass der Auslösemechanismus die Klemmeinheit betätigt, wann immer die Spule durch die Arretierungseinheit arretiert ist und ein Drehmoment in negativer Drehrichtung wirkt. Dabei wird das Gurtband sowohl im Falle eines unbeabsichtigten Loslassens des Rollstuhls beim Befördern in das Fahrzeug, als auch im Falle eines Unfalls festgeklemmt. Durch das Abklemmen des Gurtbandes im abgewickelten Bereich wird das auf der Spule aufgewickelte Gurtband vom Kraftfluss des abgewickelten Gurtbandes entkoppelt. Die absolute Dehnung des Gurtbandes wird somit reduziert, da die Beschleunigungen und Kräfte nur noch auf einen geringen Teil des Gurtbandes wirken. Ferner wird der Filmspuleneffekt, welcher zu einem Ausziehen des Gurtbandes führt, vermieden. Im Falle eines Unfalls oder auch nur unbeabsichtigten Loslassens des Rollstuhls wird somit das Nachgeben des Retraktor-Rückhaltesystems vermieden und die Gurtband-Spule zuverlässig arretiert. Durch das Festklemmen des Gurtbandes mittels der Klemmeinheit wird ferner die mechanische Belastung der Spule und der Arretierungseinheit reduziert, sodass die Lebensdauer des Retraktor-Rückhaltesystems erhöht wird. Die Erfindung vermeidet, dass jegliche Abwicklung des Gurtbandes von der Spule bedingt durch ein Drehmoment in negativer Drehrichtung entweder zu einer Beeinträchtigung des Komforts während des Beförderns des Rollstuhls in das Fahrzeug oder während der Fahrt, oder zu einer Beeinträchtigung der Sicherheit des Rollstuhlfahrers im Falle eines Unfalls führt.

Unter einer Arretierungseinheit im Sinne der Erfindung wird eine Einheit verstanden, welche die Spule gegen eine Rotation in negativer (Abwickel-) Drehrichtung sichert und das weitere Abwickeln des Gurtbandes verhindert, zugleich aber eine Rotation in positiver (Aufwickel-) Drehrichtung zulässt. Wird beispielsweise die Arretierungseinheit bereits beim Befördern eines Rollstuhls in das Fahrzeug betätigt, um diesen gegen ein Zurückrollen zu sichern, wird das Aufwickeln des Gurtbandes auf die Spule weiterhin ermöglicht.

Unter einer negativen Drehrichtung wird in Abhängigkeit der jeweiligen Ausführungsform die Richtung verstanden, in welcher das Gurtband durch eine Rotation der Spule abgewickelt wird. Eine positive Drehrichtung ist ebenso als die Richtung zu verstehen, in welcher die Spule rotiert, um das Gurtband aufzuwickeln.

Die Erfindung hat eine Federeinheit zum federnden Koppeln der Spule mit der der Arretierungseinheit, sodass die Spule im arretierten Zustand in einem vordefinierten Bereich in negativer Drehrichtung drehbar ist, wobei der Auslösemechanismus derart spielbehaftet mit der Spule gekoppelt ist, dass der Auslösemechanismus relativ zu der Spule von der Betriebsstellung in die Auslösestellung bewegt wird, wenn die Spule im arretierten Zustand in einem vordefinierten Bereich in negativer Drehrichtung dreht. Eine solche Federeinheit ermöglicht eine vordefinierte Drehung der Spule in negativer Drehrichtung, um eine Überlast des Retraktor-Rückhaltesystems bei arretierter Spule beispielsweise im Falle eines Unfalls zu vermeiden. Durch eine solche vordefinierte Drehung in negativer Drehrichtung dreht die Spule so lange weiter, bis die Klemmvorrichtung betätigt und die Spule endgültig durch die Arretierungsvorrichtung in ihrer Bewegung gestoppt ist.

Ein Auslösemechanismus im Sinne der Erfindung ist ein Mechanismus, welcher mit der Arretierungseinheit und der Spule mechanisch oder auch signalleitend oder durch eine Kombination von beidem gekoppelt werden kann, um die Klemmeinheit zu betätigen, wann immer ein Drehmoment in negativer Drehrichtung und die Spule sich in ihrem arretierten Zustand befindet.

Gemäß einer vorteilhaften Ausführungsform der Erfindung ist der Auslösemechanismus ein mechanisch betätigbarer Auslösemechanismus, welcher von einer Betriebsstellung in eine Auslösestellung bewegbar ist, um die Klemmeinheit zu betätigen. Durch ein mechanisch betätigbaren Auslösemechanismus wird sichergestellt, dass die Klemmvorrichtung auch bei einer Betriebsstörung, insbesondere auch einer Störung der Signalübertragung und elektrischen Versorgung des gesamten Fahrzeugs, zuverlässig im Falle eines Unfalls betätigt wird. Ferner ist eine mechanische Betätigung des Auslösemechanismus, welcher von einer Betriebsstellung in eine Auslösestellung bewegbar ist, kostengünstig und in einfacher Weise zu warten.

Vorzugsweise ist der Auslösemechanismus an der Federeinheit um einen exzentrischen Drehpunkt drehbar gelagert, und durch eine Rotation um den exzentrischen Drehpunkt in die Auslösestellung bewegbar, wenn die Spule im arretierten Zustand in einem vordefinierten Bereich in negativer Drehrichtung dreht. Somit ist der Auslösemechanismus in einer einfachen und kompakten Bauweise durch eine Dreh- bzw. Schwenkbewegung um den exzentrischen Drehpunkt in die Auslösestellung bewegbar.

Unter einem exzentrischen Drehpunkt wird hier ein Drehpunkt verstanden, welcher nicht mit dem Drehpunkt der Retraktor-Spule übereinstimmt. Erfährt der Auslösemechanismus ein Drehmoment durch die Spule, wird dieser durch die drehbare Lagerung an der Federeinheit derart gehemmt, dass der Auslösemechanismus zunächst nicht gemeinsam mit der Spule um die Rotationsachse der Spule rotiert, sondern um den exzentrischen Drehpunkt.

Vorzugsweise ist die Federeinheit ferner dazu eingerichtet, eine Rückstellkraft auf den Auslösemechanismus aufzubringen, um den Auslösemechanismus von der Auslösestellung in die Betriebsstellung zu bringen. Die Erfindung macht sich die Erkenntnis zunutze, dass eine Rückstellkraft, welche durch die Federeinheit auf dem Auslösemechanismus aufgebracht wird, diesen in einfacher und funktionaler Weise zurück in die Betriebsstellung bringt, ohne zusätzlichen Bauraum zu erfordern. Somit erfolgt das Festklemmen und Lösen des Gurtbandes durch die Klemmeinheit, welche durch den Auslösemechanismus betätigt wird, reversibel.

Gemäß einer vorteilhaften Ausführungsform der Erfindung ist der Auslösemechanismus ein sensorisch betätigbarer Auslösemechanismus, welcher signalleitend mit der Spule und der Arretierungseinheit verbunden ist, und dazu eingerichtet ist, die Klemmeinheit zu betätigen, wenn er zumindest ein Signal empfängt, das anzeigt, dass auf die Spule ein Drehmoment in negativer Drehrichtung wirkt und/oder die Spule durch die Arretierungseinheit arretiert ist. Somit wird weitgehend auf verschleißanfällige mechanische Bauteile verzichtet. Sensoren, wie beispielsweise Drehgeber oder andere optische Sensoren stellen dabei kostengünstige und wartungsarme Bauelemente dar.

Gemäß einer vorteilhaften Weiterbildung der Erfindung umfasst das Retraktor-Rückhaltesystem ferner eine Kopplungseinheit, welche dazu eingerichtet ist, den Auslösemechanismus mit der Klemmeinheit zu koppeln. Eine solche Kopplungseinheit ermöglicht eine Weiter- bzw. Umleitung der Bewegung des Auslösemechanismus zur Betätigung der Klemmeinheit, sodass dieser individuell und bauraumgerecht an dem Gehäuse angeordnet werden kann. Somit kann der Auslösemechanismus ferner benachbart zu der Spule und der Arretierungseinheit angeordnet werden und die Kopplungseinheit den Auslösemechanismus mit der Klemmeinheit koppeln, ohne eine Einschränkung hinsichtlich der Gestaltungsvielfalt zu erfordern.

Vorzugsweise umfasst die Kopplungseinheit ein drehbar gelagertes Kopplungsteil und eine mit der Klemmeinheit gekoppelte Hebeleinheit, wobei das Kopplungsteil in der Auslösestellung mit dem Auslösemechanismus in Eingriff bringbar und dazu eingerichtet ist, die Hebeleinheit mit dem Auslösemechanismus zu koppeln und in ihrer Bewegung zu führen. Somit wird ein drehbar gelagertes Kopplungsteil in der Auslösestellung mit dem Auslösemechanismus vorzugsweise formschlüssig in Eingriff gebracht, sodass die Bewegung des Auslösemechanismus von der Betriebs- in die Auslösestellung mittels des Kopplungsteils auf die Hebeleinheit übertragen werden kann, wobei die Hebeleinheit in ihrer Bewegung durch das Kopplungsteil geführt wird und das Kopplungsteil vorzugsweise dazu eingerichtet ist, die durch den Auslösemechanismus um den exzentrischen Drehpunkt ausgeführte Schwenkbewegung in eine lineare Bewegung zumindest eines Teils der Hebeleinheit umzuwandeln.

Vorzugsweise ist zumindest ein Teil der Hebeleinheit in einer Ebene senkrecht zur Rotationsachse bewegbar an dem Kopplungsteil gelagert und das Kopplungsteil dazu eingerichtet, zumindest einen Teil der Hebeleinheit in eine erste Richtung zu bewegen, um die Hebeleinheit mit einem mit der Spule gekoppelten Zahnrad in Eingriff zu bringen, und wobei das Zahnrad dazu eingerichtet ist, zumindest einen Teil der Hebeleinheit in eine zweite Richtung zu bewegen, um die Klemmeinheit zu betätigen. Somit kann zumindest ein Teil der Hebeleinheit mit einem Zahnrad, welches der Spule zugeordnet bzw. mit der Spule gekoppelt ist, in Eingriff gebracht werden, um die vordefinierte Drehbewegung, welche die Spule aufgrund der federnden Kopplung mit der Arretierungseinheit mittels der Federeinheit ausführt, zu nutzen und in eine Relativbewegung zumindest eines Teils der Hebeleinheit umzuwandeln, um die Klemmeinheit zu betätigen.

Weiter vorzugsweise umfasst das Retraktor-Rückhaltesystem ferner ein Rückstellelement, welches dazu eingerichtet ist, eine Rückstellkraft auf die Kopplungseinheit aufzubringen. Somit kann die Kopplungseinheit reversibel mittels der Rückstellkraft in eine Grundposition bewegt werden, in welcher sie erneut mit dem Auslösemechanismus in Eingriff bringbar ist, um die Kopplungseinheit zu betätigen.

Gemäß einer vorteilhaften Weiterbildung der Erfindung weist die Arretierungseinheit ein Gehäuseteil mit einer Außenverzahnung und ein mit der Außenverzahnung kooperierendes Arretierungsteil auf, wobei das Gehäuseteil drehbar gelagert und mit der Spule gekoppelt ist, und das Arretierungsteil mit der Außenverzahnung in Eingriff bringbar ist, um die Spule zu arretieren. Somit kann die Spule arretiert werden, sobald die distalen Enden des Sicherheitsgurtes mit einem Rollstuhl gekoppelt sind. Das Gurtband kann folglich beim Hereinschieben des Rollstuhls in das Fahrzeug in positiver Drehrichtung auch im arretierten Zustand aufgewickelt werden. Einzig eine Rotation der Gurtbandspule in negativer Drehrichtung wird blockiert, sodass auch wenn der Rollstuhl beim hereinschieben in das Fahrzeug plötzlich losgelassen wird, dass Gurtband zuverlässig gegen ein Abwickeln von der Spule blockiert wird.

Vorzugsweise ist die Außenverzahnung dabei nach Art einer Ratsche ausgebildet. Im Sinne der Erfindung wird unter einer Ausbildung nach Art einer Ratsche verstanden, dass die Zähne jeweils relativ zur radialen Richtung des Zahnrades schräg angeordnet sind, sodass das Eingriffsmittel eine Bewegung des Gehäuseteils in negativer Drehrichtung blockiert und eine Drehung des Gehäuseteils in positiver Drehrichtung zulässt. Somit wird die Spule, welche mit dem Gehäuseteil gekoppelt ist, in zuverlässiger Weise in negativer Drehrichtung im arretierten Zustand blockiert.

Gemäß einer vorteilhaften Weiterbildung der Erfindung umfasst die Federeinheit eine mit der Spule gekoppelte Feder-Platte und ein mit dem Gehäuseteil gekoppeltes Federelement. Somit ist der Auslösemechanismus mittels der Feder-Platte mit der Spule gekoppelt, wird aber durch das Federelement, welches mit der Arretierungseinheit gekoppelt ist, derart in der Drehbewegung gehemmt, dass der Auslösemechanismus zunächst nicht gemeinsam mit der Spule um den Drehpunkt der Spule rotieren kann, sondern zunächst um den exzentrischen Drehpunkt relativ zu der Spule verschwenkt wird und so in die Auslösestellung gelangt. Erst in der Auslösestellung kann der Auslösemechanismus nicht länger um den exzentrischen Drehpunkt rotieren, sodass zumindest ein Teil des Auslösemechanismus gemeinsam mit der Spule entgegen der Federkraft der Federeinheit rotiert.

Vorzugsweise umfasst die Arretierungseinheit einen Aktuator zum Betätigen des Arretierungsteils, wobei der Aktuator dazu eingerichtet ist, eine Rückstellkraft auf das Arretierungsteil aufzubringen, um die Spule freizugeben. Somit verbleibt das Retraktor-Rückhaltesystem so lange im arretierten Zustand, bis der Aktuator die Arretierungseinheit und dabei insbesondere das Arretierungsteil der Arretierungseinheit betätigt, um die Außenverzahnung des Gehäuseteils freizugeben. Somit wird auch im Falle einer Störung der Signalübertragung bzw. im Falle eines Unfalls die Spule zuverlässig arretiert.

Die Erfindung wird vorteilhaft durch eine Steuerungseinheit weitergebildet, welche signalleitend mit der Arretierungseinheit verbindbar ist, um den Aktuator zu steuern. Durch eine solche Steuerungseinheit kann beispielsweise eine leicht zugängliche Benutzerschnittstelle verwendet werden, um einen Arretierungsbefehl bereitzustellen, welcher von der Steuerungseinheit an die Arretierungseinheit übertragen wird, um den Aktuator zu steuern und die Spule zu arretieren.

Gemäß einer vorteilhaften Weiterbildung der Erfindung weist die Spule einen Antrieb auf, welcher signalleitend mit der Steuerungseinheit verbindbar und dazu eingerichtet ist, das Gurtband aufzuwickeln. Durch einen solchen signalleitend mit der Steuerungseinheit verbindbaren Antrieb, kann das Aufwickeln des Gurtbandes auf der Gurtspule durch die Steuerungseinheit gesteuert werden, sodass die Handhabung vereinfacht wird. Vorzugsweise ist die Spule dazu eingerichtet, Gurtband mit einer Länge im Bereich von mindestens 3m bis 5m, vorzugsweise eine Länge von etwa 4m, aufzunehmen. Somit wird eine ausreichende Länge bereitgestellt, um das Gurtband außerhalb eines Fahrzeugs mit dem vorderen Teil eines Rollstuhls zu koppeln. Die Zugänglichkeit von Rollstühlen ist insbesondere innerhalb kleiner Fahrzeuge sehr eingeschränkt, sodass es wünschenswert ist, den Rollstuhl bereits außerhalb des Fahrzeugs mit dem Retraktor-Rückhaltesystem zu koppeln. Besonders vorteilhaft ist dabei eine Länge von bis zu 4 Metern, welche eine gute Zugänglichkeit zum Koppeln des Rollstuhls mit dem Rückhaltesystem bietet.

Die Erfindung wurde vorstehend in Bezug auf einen ersten Aspekt beschrieben.

Die Erfindung betrifft ferner in einem zweiten Aspekt die Verwendung eines Retraktor-Rückhaltesystems zur Sicherung von Rollstühlen und/oder Personen in Fahrzeugen gemäß dem ersten Aspekt der Erfindung, wobei das Retraktor-Rückhaltesystem umfasst: ein Gehäuse, eine in einer positiven und negativen Drehrichtung drehbar an dem Gehäuse gelagerte Retraktor-Spule zum Aufnehmen eines mit einem Rollstuhl koppelbaren Gurtbandes, wobei das Gurtband durch eine Rotation der Spule in der positiven Drehrichtung aufwickelbar und durch eine Rotation der Spule in der negativen Drehrichtung abwickelbar ist, eine Arretierungseinheit zum Arretieren der Spule gegen eine Rotation in negativer Drehrichtung in einem Betriebszustand des Retraktor-Rückhaltesystems, und eine an dem Gehäuse angeordnete Klemmeinheit zum lösbaren Festklemmen des von der Spule abgewickelten Gurtes, und ein Auslösemechanismus zur Betätigung der Klemmeinheit, dadurch gekennzeichnet, dass der Auslösemechanismus derart mit der Arretierungseinheit und der Spule koppelbar ist, dass die Klemmeinheit betätigt wird, wenn auf die Spule ein Drehmoment in negativer Drehrichtung wirkt und die Spule durch die Arretierungseinheit arretiert ist.

Die Erfindung betrifft in einem dritten Aspekt ein Verfahren zur Sicherung von Rollstühlen und/oder Personen in Fahrzeugen mittels eines Retraktor-Rückhaltesystems gemäß dem ersten Aspekt der Erfindung, wobei das Retraktor-Rückhaltesystem umfasst: ein Gehäuse, eine in einer positiven und negativen Drehrichtung drehbar an dem Gehäuse gelagerte Retraktor-Spule zum Aufnehmen eines mit einem Rollstuhl koppelbaren Gurtbandes, wobei das Gurtband durch eine Rotation der Spule in der positiven Drehrichtung aufwickelbar und durch eine Rotation der Spule in der negativen Drehrichtung abwickelbar ist, eine Arretierungseinheit zum Arretieren der Spule gegen eine Rotation in negativer Drehrichtung in einem Betriebszustand des Retraktor-Rückhaltesystems, und eine an dem Gehäuse angeordnete Klemmeinheit zum lösbaren Festklemmen des von der Spule abgewickelten Gurtes, und einen mit der Arretierungseinheit und der Spule koppelbaren Auslösemechanismus zur Betätigung der Klemmeinheit, wobei das Verfahren die Schritte umfasst: Abwickeln des Gurtbandes durch eine Rotation der Spule in der negativen Drehrichtung, Verbinden des distalen Endes des Gurtbandes mit einem Rollstuhl, Arretierten der Spule gegen eine Rotation in negativer Drehrichtung, Positionieren des Rollstuhls in dem Fahrzeug, Aufwickeln des Gurtbandes durch eine Rotation der Spule in der positiven Drehrichtung, Betätigen der Klemmeinheit durch die Auslöseeinheit, wenn auf die Spule ein Drehmoment in negativer Drehrichtung wirkt und die Spule durch die Arretierungseinheit arretiert ist. Weitere Vorteile, Merkmale und Einzelheiten der Erfindung ergeben sich aus der nachfolgenden Beschreibung der bevorzugten Ausführungsformen, sowie anhand der folgenden Figuren. Im Einzelnen zeigen:
- Figur 1: eine perspektivische Darstellung eines Retraktor-Rückhaltesystems gemäß einer bevorzugten Ausführungsform,
- Figur 2: eine schematische Darstellung des Retraktor-Rückhaltesystems gemäß Figur 1 in einer ersten Seitenansicht,
- Figur 3: eine schematische Darstellung des Retraktor-Rückhaltesystems gemäß Figur 1 in einer zweiten Seitenansicht,
- Figur 4: eine zweite perspektivische Darstellung des Retraktor-Rückhaltesystems gemäß Figur 1,
- Figur 5: eine erste schematische Detaildarstellung einer Federeinheit und eines Auslösemechanismus des Retraktor-Rückhaltesystems gemäß Figur 1,
- Figur 6: eine zweite schematische Detaildarstellung einer Federeinheit und eines Auslösemechanismus des Retraktor-Rückhaltesystems gemäß Figur 1,
- Figur 7: eine schematische Detaildarstellung eines Gehäuseteils des Retraktor-Rückhaltesystems gemäß Figur 1,
- Figur 8: eine schematische Detaildarstellung eines Gehäuseteils und einer darin angeordneten Auslöseeinheit des Retraktor-Rückhaltesystems gemäß Figur 1,
- Figur 9: eine schematische Detaildarstellung eines Gehäuseteils und einer Federeinheit und einer Auslöseeinheit und eines Kopplungsteils eines Kopplungsmechanismus des Retraktor-Rückhaltesystems gemäß Figur 1, und
- Figur 10: eine perspektivische Darstellung eines Retraktor-Rückhaltesystems gemäß einer alternativen bevorzugten Ausführungsform.

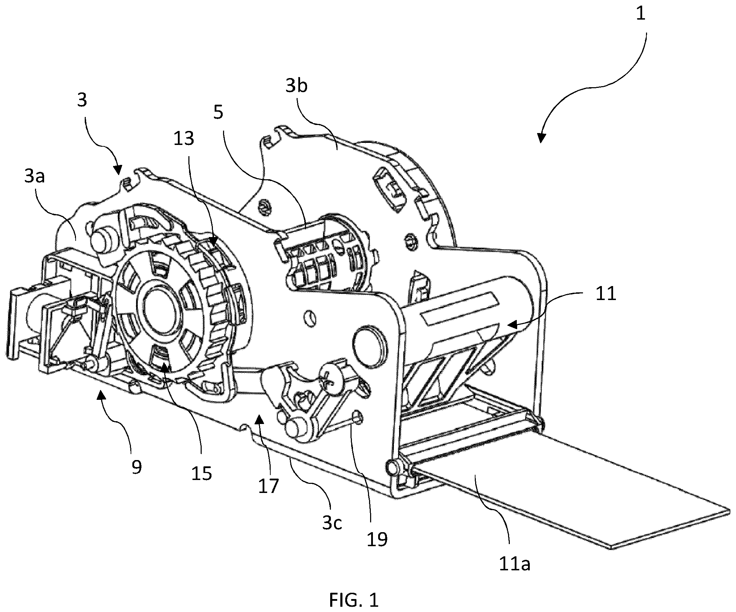

Fig. 1 zeigt das erfindungsgemäße Retraktor-Rückhaltesystem in einer perspektivischen Ansicht.

Das Retraktor-Rückhaltesystem 1 umfasst ein Gehäuse 3 in welchem eine Retraktor-Spule 5 in einer positiven Drehrichtung und in einer negativen Drehrichtung drehbar gelagert ist.

Das Gehäuse 3 umfasst zwei beabstandete und parallel zueinander ausgerichtete Gehäusewände 3a, 3b und einen Gehäuseboden 3c. Es ist vorzugsweise aus Metall, Stahl oder festem Kunststoff ausgebildet.

Auf der Retraktor-Spule 5 ist ein Gurtband 7 aufwickelbar, welches zur besseren Darstellung hier nur im abgewickelten Bereich des Gurtbandes 7 dargestellt ist.

Die Spule 5 ist mittels einer Arretierungseinheit 9 in negativer (Abwickel-) Drehrichtung arretierbar.

Das Retraktor-Rückhaltesystem 1 umfasst ferner eine Klemmeinheit 11 zum Festklemmen des Gurtbandes 7 in dessen abgewickelten Bereich, einen Auslösemechanismus 13 zum Betätigen der Klemmeinheit 11 und eine Federeinheit 15 zum federnden Koppeln der Spule 5 mit der Arretierungseinheit 9.

Zum Koppeln des Auslösemechanismus 13 mit der Klemmeinheit 11 weist das Retraktor-Rückhaltesystem 1 eine Kopplungseinheit 17 auf sowie ferner ein Rückstellelement 19 zum Aufbringen einer Rückstellkraft auf die Kopplungseinheit 17 zum Lösen der Klemmeinheit 11.

Die Klemmeinheit 11 ist mittels eines Lagers, welches vorzugsweise einen Bolzen aufweist, teilweise schwenkbar an dem Gehäuse 3 und insbesondere den Gehäuseseiten 3a, 3b gelagert. Durch ein Verschwenken der Klemmeinheit in Richtung des Gurtbandes 7 wird ein Klemmteil 11a, welches beispielsweise als im wesentlichen ebenes Metallstück ausgebildet sein kann auf das Gurtband 7 gedrückt und klemmt dieses reibschlüssig fest. Dabei wirkt es selbstklemmend, d.h. die Klemmkraft nimmt zu bei zunehmender Zugkraft auf das Gurtband 7.

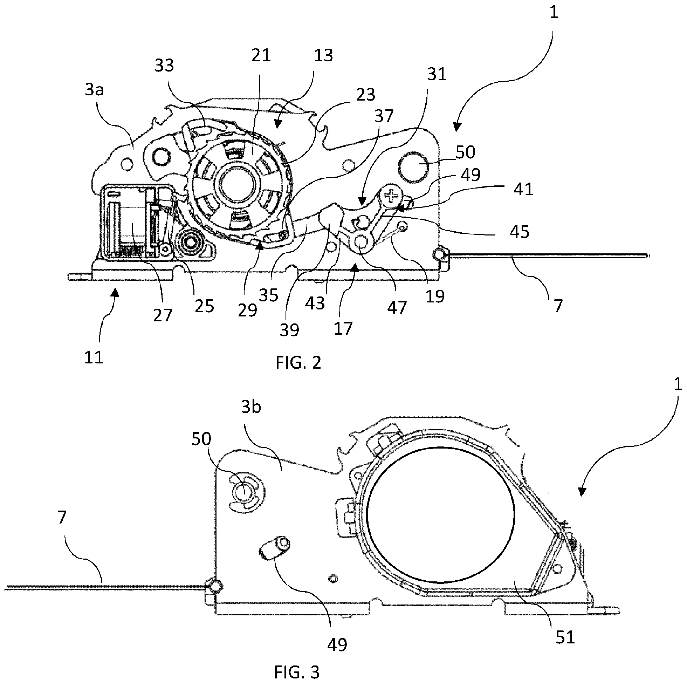

Wie insbesondere die Seitenansicht des Retraktor-Rückhaltesystems 1 gemäß Fig. 2 zeigt, umfasst die Arretierungseinheit 9 ein drehbar an dem Gehäuse 3 gelagertes Gehäuseteil 21 mit einer Außenverzahnung 23 und Arretierungsteil 25.

Das Gehäuseteil 21 mit Außenverzahnung 23 ist nach Art einer Ratsche ausgebildet und mit der Außenverzahnung 23 in Eingriff bringbar. Das Arretierungsteil 25 ist dabei derart mit der Außenverzahnung 23 in Eingriff bringbar, dass eine Rotation des Gehäuseteils 21 in negativer Drehrichtung verhindert, bzw. blockiert wird und eine positive Drehrichtung zugelassen wird.

Die Arretierungseinheit 9 umfasst ferner einen Aktuator 27 zum Betätigen des Arretierungsteils 25. Der Aktuator 27 ist dabei dazu eingerichtet, das Arretierungsteil 25 entgegen einer Federkraft von dem Gehäuseteil 21 wegzubewegen, um die Spule 5 wieder freizugeben.

Der Auslösemechanismus 13 ist innerhalb des Gehäuseteils 21 angeordnet und mit der Kopplungseinheit 17 verbunden.

Die Federeinheit 15 ist innerhalb des Gehäuseteils 21 angeordnet und koppelt die Arretierungseinheit 9 über das Gehäuseteil 21 mit der Spule 5.

Die Kopplungseinheit 17 umfasst ein Kopplungsteil 29 und eine Hebeleinheit 31.

Das Kopplungsteil 29 ist drehbar an dem Gehäuse 3 gelagert und durch Bewegen des Auslösemechanismus 13 in die Auslösestellung mit dem Auslösemechanismus 13 in Eingriff bringbar. Das Kopplungsmittel 29 ist in einem Auslösezustand des Auslösemechanismus, wenn ein negatives Drehmoment auf die Spule 5 wirkt und die Spule durch die Arretierungseinheit arretiert ist, mit der Hebeleinheit 31 in Eingriff bringbar.

Das Kopplungsteil 29 weist dafür mindestens eine Führung 33 auf, welche mit einem Teil der Hebeleinheit 31 in Eingriff ist und diese in ihrer Bewegung führt.

Die Hebeleinheit 31 umfasst einen Hebel 35 mit einem Zapfen 37, welcher in Eingriff mit der Führung 33 ist und in dieser geführt, bzw. beweglich gelagert wird. Der Hebel 35 ist über ein Gelenk 39 mit einem Schwenkhebel 41 gekoppelt.

Der Schwenkhebel 41 umfasst einen ersten Schenkel 43, welcher mit dem Hebel 35 über das Gelenk 39 gekoppelt ist, und einen zweiten Schenkel 45, welcher mit der Klemmeinheit 11 gekoppelt ist. Der Schwenkhebel 41 ist um einen Drehpunkt 47 drehbar, bzw. schwenkbar gelagert, wobei das distale Ende des Schenkels 45 mit einer Führung 49, welche an dem Gehäuse 3 ausgebildet ist, in Eingriff ist und in der Bewegung geführt wird.

Die Klemmeinheit 11 ist mit dem distalen Ende des Schenkels 45 gekoppelt und um eine Schwenkachse 50 schwenkbar, bzw. drehbar an dem Gehäuse 3 gelagert. Die Schwenkachse 50 ist mit beiden beabstandeten und parallel zueinander ausgerichteten Gehäuseseiten 3a, 3b in Eingriff.

Wie insbesondere die in Fig. 3 dargestellte Seitenansicht des Retraktor-Rückhaltesystems 1 zeigt, ist die Führung 49 an den zwei Gehäusewänden 3a, 3b ausgebildet und mit der Klemmeinheit 11 beidseitig in Eingriff.

Das Gehäuse 3 weist an der Gehäuseseite 3b eine Gehäuseklappe 54 auf, welche den Zugang zu der Spule 5 absperrt, um Verletzungen zu vermeiden.

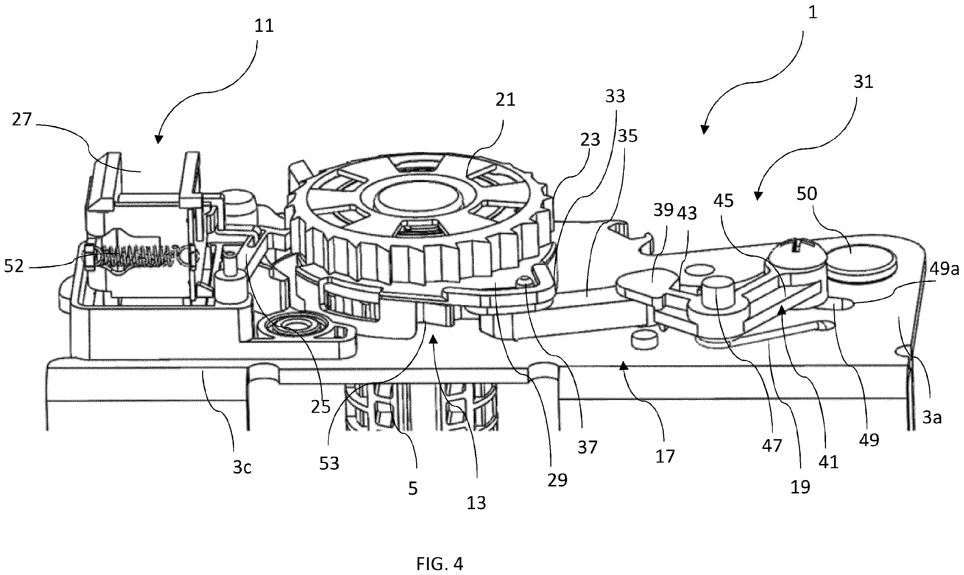

Die perspektivische Ansicht des erfindungsgemäßen Retraktor-Rückhaltesystems 1 gemäß Figur 4 zeigt insbesondere die Arretierungseinheit 9. Die Arretierungseinheit 9 umfasst wie bereits in Figur 2 gezeigt, das Gehäuseteil 21 mit Außenverzahnung 23 und das Arretierungsteil 25, welches mit der Außenverzahnung 23 in Eingriff bringbar ist.

Die Arretierungseinheit 9 umfasst ferner den Aktuator 27 zum Betätigen des Arretierungsteils 25, um die Spule 5 wieder freizugeben und eine Rückstelleinheit 52.

Die Rückstelleinheit 52 umfasst eine Zugfeder und eine mit der Zugfeder und dem Arretierungsteil 25 gekoppelte um eine Achse schwenkbar gelagerte Schwenkplatte 52a. Die Zugfeder und die Schwenkplatte 52a der Rückstelleinheit 52 sind dabei derart miteinander gekoppelt, dass die Schwenkplatte durch die Federkraft um ihre Achse verschwenkt wird und dabei das Arretierungsteil mit der Außenverzahnung 23 in Eingriff bringt. Ferner ist der Aktuator 27 mit der Schwenkplatte 52a gekoppelt und verschwenkt die Schwenkplatte 52a derart um ihre Achse, dass das Arretierungsteil 25 und die Außenverzahnung außer Eingriff gebracht werden.

Ferner zeigt Figur 4, dass der Hebel 35 der Hebeleinheit 31 in einer Ebene senkrecht zur Rotationsachse der Spule 5 zwischen dem Gehäuse 3 und dem Kopplungsteil 29 angeordnet ist und durch die Führung 33 in seiner Bewegung geführt ist. Das Kopplungsteil 29 führt den Hebel 35 in Richtung eines Zahnrads 53, welches mit der Spule 5 gekoppelt ist, um den Hebel 35 mit dem Zahnrad 53 in Eingriff zu bringen.

Die Rotation des Zahnrads 53 in negativer Drehrichtung führt zu einer Bewegung des Hebels 35 in Richtung der Klemmeinheit 11.

Diese Relativbewegung wird von dem Hebel 35 mittels der gelenkigen Verbindung durch das Gelenk 39 auf dem Schwenkhebel 41 übertragen. Der Schwenkhebel 41 wird dadurch derart um seinen Drehpunkt 47 verschwenkt, so dass er sich endseitig in der Führung 49 hin zu einem Anschlag 49a bewegt. Durch die Bewegung des Schwenkhebels 41 zu dem Anschlag 49a, schwenkt die Klemmeinheit 11 um die Schwenkachse 50 und wird auf das Gurtband 7 gedrückt, sodass das Gurtband 7 durch die Klemmeinheit 11 festgeklemmt wird.

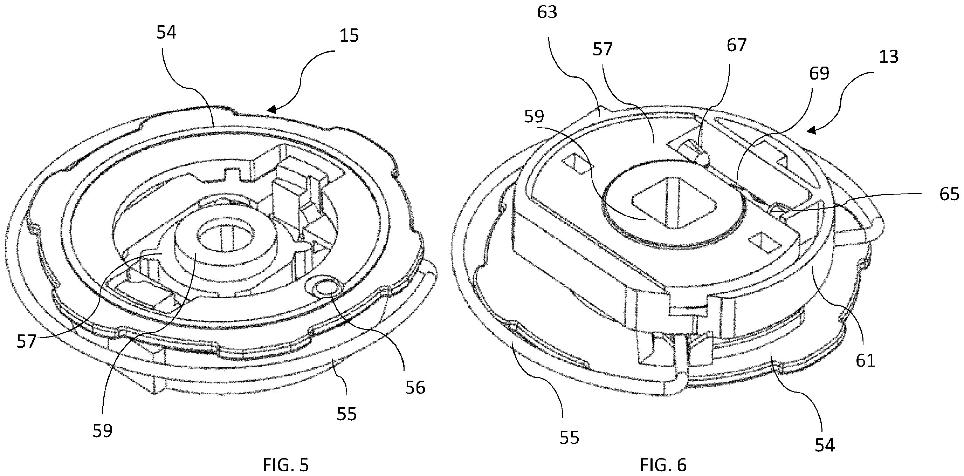

Die Figuren 5 und 6 zeigen jeweils eine perspektivische Ansicht der Federeinheit 15 und des Auslösemechanismus 13 in einer ersten und in einer zweiten perspektivischen Ansicht.

Die Federeinheit 15 umfasst eine Feder-Platte 54 und ein mit der Feder-Platte gekoppeltes Federelement 55.

Die Feder-Platte 54 ist dazu eingerichtet, mit der Spule (nicht gezeigt) gekoppelt zu werden und das Federelement 55 ist dazu eingerichtet, mit der Arretierungseinheit und insbesondere dem Gehäuseteil (nicht gezeigt) in Eingriff gebracht zu werden. Das Federelement 55 liegt dabei zumindest teilweise an einem inneren Umfang des Gehäuseteils an.

An der Feder-Platte 54 ist ein exzentrischer Drehpunkt 56 ausgebildet, an welchem die Auslöseeinheit (nicht gezeigt) drehbar gelagert werden kann.

Das Rückhaltesystem 1 umfasst ferner eine Spulen-Platte 57, welche eine Steckverbindung 59 zum formschlüssigen In-Eingriff-bringen mit der Spule 5 aufweist, wie insbesondere Fig. 6 zeigt.

Die Steckverbindung 59 ist spulenseitig als Vierkantsteckverbindung ausgebildet, um mit einem korrespondierenden Steckteil der Spule 5 in Eingriff gebracht zu werden.

Der Auslösemechanismus 13 umfasst eine Auslöse-Platte 61 mit einen Vorsprung 63, welcher dazu eingerichtet ist, mit der Kopplungseinheit 17 in Eingriff gebracht zu werden.

Die Spulen-Platte 57 ist spielbehaftet mit einer Auslöse-Platte 61 des Auslösemechanismus 13 in Eingriff bringbar. Die Auslöse-Platte 61 umschließt dabei im Wesentlichen die Spulen-Platte 57, wobei die Auslöse-Platte 61 relativ zu der Spulen-Platte 57 bewegbar gelagert ist. Die Spulen-Platte 57 und die Auslöse-Platte 61 weisen jeweils ein Führungsteil 65, 67 auf, welche mit einer Druckfeder (nicht gezeigt) an der Position 69 in Eingriff bringbar sind.

Die Auslöse-Platte 61 ist drehbar um den exzentrischen Drehpunkt 56 gelagert, sodass die Spule über die spielbehaftete Kopplung der Spulen-Platte 57 und der Auslöse-Platte 61 mit der Feder-Platte 54 gekoppelt ist.

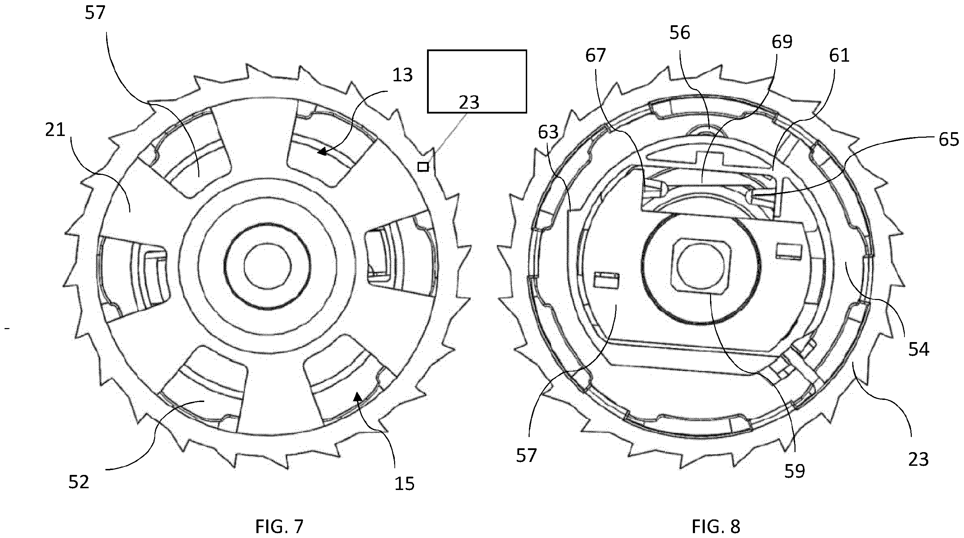

Die Figuren 7 und 8 zeigen Detaildarstellungen des Gehäuseteils 21 und der Anordnung der Federeinheit 15 sowie des Auslösemechanismus 13 in dem Gehäuseteil 21. Das Gehäuseteil 21 ist als einseitig geöffnetes, im Wesentlichen radförmiges, Gehäuse ausgebildet. Am äußeren Umfang des Gehäuseteils 21 ist die Außenverzahnung 23 ausgebildet. Die Außenverzahnung 23 verläuft, nach Art einer Ratsche, relativ zur radialen Richtung des Gehäuseteils 21 derart geneigt, dass im arretierten Zustand eine Rotation in negativer Drehrichtung blockiert und eine Rotation in positiver Drehrichtung zum Aufwickeln des Gurtbandes ermöglicht wird.

Wie insbesondere Fig. 8 zeigt, ist innerhalb des Gehäuseteils 21 die Feder-Platte 54 angeordnet und zumindest abschnittsweise mit einem inneren Umfang des Gehäuseteils 21 in Kontakt. Die Feder-Platte 54 wird dabei in einem vordefinierten Bereich, in welchem sie gemeinsam mit der Spule 5 relativ zu dem arretierten Gehäuseteil 21 verdrehbar ist, in ihrer Bewegung durch das Gehäuseteil 21 geführt.

An dem Gehäuseteil 21 ist im exzentrischen Drehpunkt 56 die Auslöse-Platte 61 drehbar gelagert.

In der Auslöse-Platte 61 ist die Spulen-Platte 57 spielbehaftet gelagert. Die Spulen-Platte 57 ist mittels der Steckverbindung 59 mit der Spule gekoppelt.

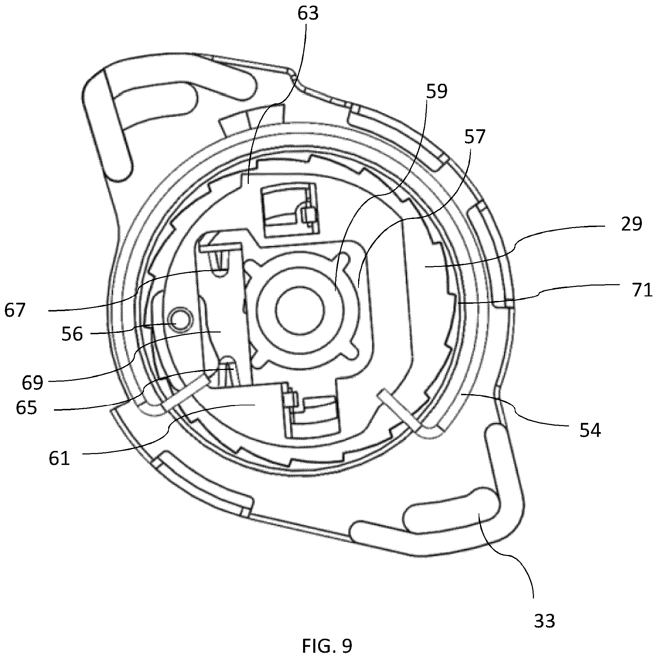

Fig. 9 zeigt das Kopplungsteil 29 der Kopplungseinheit 17. Das Kopplungsteil 29 ist dazu eingerichtet, den Auslösemechanismus mit der Hebeleinheit 31 in Eingriff zu bringen, um die Klemmeinheit 11 zu betätigen.

Das Kopplungsteil 29 ist als Scheibe ausgebildet, welche drehbar an dem Gehäuse 3 um den Drehpunkt der Spule 5 gelagert ist. Das Kopplungsteil 29 weist zwei gegenüberliegend ausgebildete Führungen 33 auf, welche als Langlöcher ausgebildet sind und eine Innenverzahnung 71 auf, mit welcher der Vorsprung 63 der Auslöse-Platte 61 in der Auslöseposition in Eingriff bringbar ist.

Im Folgenden wird die Funktionsweise der Auslöseeinheit 13 und der Federeinheit 15 und das Verfahren exemplarisch unter Bezugnahme auf die Figuren 1 bis 9 erläutert.

Wirkt auf die Spule 5 im arretierten Zustand ein negatives Drehmoment, bewegt sich die Spulen-Platte 57 relativ zu dem arretierten Gehäuseteil 21, wobei die Rotation spielbehaftet auf die Auslöse-Platte 61 übertragen wird.

Die Auslöse-Platte 61, welche über den exzentrischen Drehpunkt 56 mit der Feder-Platte 54 gekoppelt ist, ist mittels der Federeinheit 15 derart mit der Arretierungseinheit 9 gekoppelt, dass sie diese Drehbewegung zunächst nicht ausführt und aufgrund des geringeren Widerstands zunächst um den exzentrischen Drehpunkt 56 relativ zu der Spulen-Platte 57 verschwenkt, sodass sich der Vorsprung 63 relativ zu der Spulen-Platte 57 bewegt, um mit der Kopplungseinheit 17 in Eingriff zu kommen.

Im Auslösezustand, wenn der Vorsprung 63 mit der Innenverzahnung 71 in Eingriff ist, kann die Auslöse-Platte 61 nicht weiter verschwenkt werden, sodass die Rotation auf die Feder-Platte 54 übertragen wird, welche dann entgegen der Federkraft des Federelements 56 relativ zu dem Gehäuseteil 21 gemeinsam mit der Spule 5 in einem vordefinierten Bereich rotiert.

Ferner wird in diesem Zustand die Rotation der Spule 5 gegen die Federkraft des Federelement 55 auf das Kopplungsteil 29 übertragen, sodass dieses um den Drehpunkt der Spule 5 rotiert. Durch diese Rotation wird derZapfen 37 des Hebels 35 der Hebeleinheit 31 in Richtung des Zahnrads 53 bewegt, um mit diesem in Eingriff zu kommen. Dabei wird der Zapfen 37 relativ zu der Grundfläche 3c des Gehäuses nach oben bewegt. Anschließend wird der Zapfen 37 durch die Rotation des Zahnrads 53 in negativer Drehrichtung, innerhalb der Führung 33 relativ zu der Grundfläche 3c des Gehäuses nach rechts bewegt, wodurch der Schwenkhebel 41 verschwenkt und die Klemmeinheit 11 betätigt wird.

Die Druckfeder am Einbauort 69, das Rückstellelement 19 und das Federelement 55 sind dabei dazu eingerichtet, nach Betätigung der Klemmvorrichtung 11, in einem Zustand in welchem kein Drehmoment in negativer Drehrichtung auf die Spule 5 wirkt, die Auslöseeinheit 13, die Federeinheit 15 und die Kopplungseinheit 17 durch Aufbringen einer Rückstellkraft wieder in ihren Betriebszustand zu versetzen.

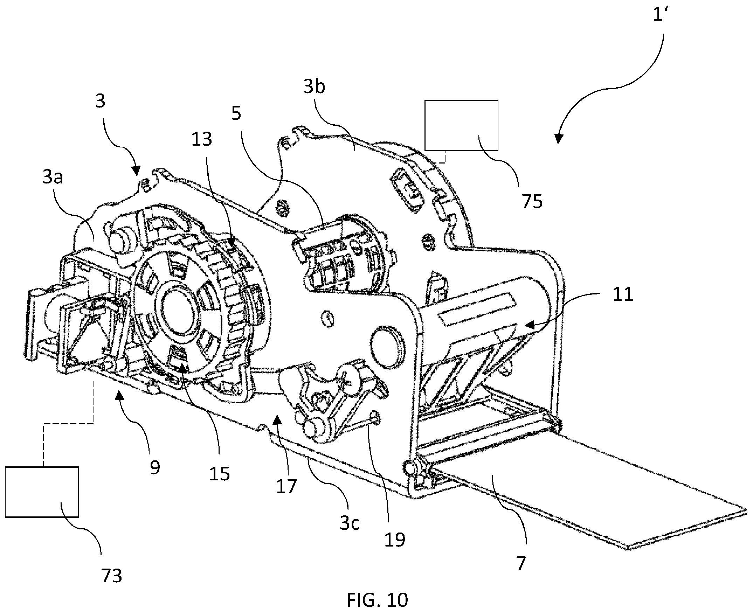

Fig. 10 zeigt eine alternative bevorzugte Ausführungsform des erfindungsgemäßen Retraktor-Rückhaltesystems 1' in einer perspektivischen Ansicht.

Das Retraktor-Rückhaltesystem 1' umfasst ein Gehäuse 3 in welchem eine Retraktor-Spule 5 in einer positiven Drehrichtung und in einer negativen Drehrichtung drehbar gelagert ist.

Das Gehäuse 3 umfasst zwei beabstandete und parallel zueinander ausgerichtete Gehäusewände 3a, 3b und einen Gehäuseboden 3c.

Auf der Retraktor-Spule 5 ist ein Gurtband 7 aufwickelbar, welches zur besseren Darstellung hier nur im abgewickelten Bereich des Gurtbandes 7 dargestellt ist.

Die Spule 5 ist mittels einer Arretierungseinheit 9 in negativer Drehrichtung arretierbar.

Das Retraktor-Rückhaltesystem 1' umfasst ferner eine Klemmeinheit 11 zum Festklemmen des Gurtbandes 7 in dessen abgewickelten Bereich, einen Auslösemechanismus 13 zum Betätigen der Klemmeinheit 11 und eine Federeinheit 15 zum federnden Koppeln der Spule 5 mit der Arretierungseinheit 9.

Zum Koppeln des Auslösemechanismus 13 mit der Klemmeinheit 11 weist das Retraktor-Rückhaltesystem 1' eine Kopplungseinheit 17 auf sowie ferner ein Rückstellelement 19 zum Aufbringen einer Rückstellkraft auf die Kopplungseinheit 17 zum Lösen der Klemmeinheit 11.

Das Retraktor-Rückhaltesystem 1' umfasst ferner eine Steuerungseinheit 73, welche signalleitend mit der Arretierungseinheit 9 verbindbar ist, und insbesondere mit einem der Arretierungseinheit zugeordneten Aktuator 27, um die Spule 5 zu arretieren.

Die Spule 5 weist einen Antrieb 75 auf, welcher signalleitend mit der Steuerungseinheit 73 verbindbar und dazu eingerichtet ist, das Gurtband 7 aufzuwickeln.

Die Beispiele und Erläuterungen gemäß der Figuren 2 bis 9 gelten ebenso für die in Fig. 10 gezeigte erfindungsgemäße Ausführungsform des Retraktor-Rückhaltesystem 1'.

### Bezuqszeichenliste

- 1: Retraktor-Rückhaltesystem
- 3: Gehäuse
- 5: Retraktor-Spule
- 7: Gurtband
- 9: Arretierungseinheit
- 11: Klemmeinheit
- 11a: Klemmteil
- 13, 13': Auslösemechanismus
- 15: Federeinheit
- 17: Kopplungseinheit
- 19: Rückstellelement
- 21: Gehäuseteil
- 23: Außenverzahnung
- 25: Arretierungsteil
- 27: Aktuator
- 29: Kopplungsteil
- 31: Hebeleinheit
- 33: Führung
- 35: Hebel
- 37: Zapfen
- 39: Gelenk
- 41: Winkelhebel
- 43: erster Schenkel
- 45: zweiter Schenkel
- 47: Hebel Drehpunkt
- 49: Führung
- 50: Schwenkachse
- 51: Gehäuseklappe
- 52: Rückstelleinheit
- 52a: Schwenkplatte
- 53: Spulen-Zahnrad
- 54: Feder-Platte
- 55: Federelement
- 56: exzentrischen Drehpunkt
- 57: Spulen-Platte
- 59: Steckverbindung
- 61: Auslöse-Platte
- 63: Vorsprung
- 65: erster Führungsstift
- 67: zweiter Führungsstift
- 69: Einbauort der Druckfeder
- 71: Innenverzahnung
- 73: Steuerungseinheit
- 75: Antrieb

## Patentansprüche

1. Retraktor-Rückhaltesystem (1, 1') zur Sicherung von Rollstühlen und/oder Personen in Fahrzeugen, umfassend:
- ein Gehäuse (3),
- eine in einer positiven und negativen Drehrichtung drehbar an dem Gehäuse (3) gelagerte Retraktor-Spule (5) zum Aufnehmen eines mit einem Rollstuhl koppelbaren Gurtbandes (7), wobei das Gurtband (7) durch eine Rotation der Spule (5) in der positiven Drehrichtung aufwickelbar und durch eine Rotation der Spule (5) in der negativen Drehrichtung abwickelbar ist,
- eine Arretierungseinheit (9) zum Arretieren der Spule (5) gegen eine Rotation in negativer Drehrichtung in einem Betriebszustand des Retraktor-Rückhaltesystems (1, 1'), und
- eine an dem Gehäuse angeordnete Klemmeinheit (11) zum lösbaren Festklemmen des von der Spule (5) abgewickelten Gurtbandes (7), und
- einen Auslösemechanismus (13) zur Betätigung der Klemmeinheit (11),
wobei der Auslösemechanismus (13) derart mit der Arretierungseinheit (9) und der Spule (5) koppelbar ist, dass die Klemmeinheit (11) betätigt wird, wenn auf die Spule (5) ein Drehmoment in negativer Drehrichtung wirkt und die Spule (5) durch die Arretierungseinheit (9) arretiert ist, und
wobei der Auslösemechanismus (13) ein mechanisch betätigbarer Auslösemechanismus (13) ist, welcher von einer Betriebsstellung in eine Auslösestellung bewegbar ist, um die Klemmeinheit (11) zu betätigen bzw. zu lösen,
**gekennzeichnet durch** eine Federeinheit (15) zum federnden Koppeln der Spule (5) mit der Arretierungseinheit (9), sodass die Spule (5) im arretierten Zustand in einem vordefinierten Bereich in negativer Drehrichtung drehbar ist,
wobei der Auslösemechanismus (13) derart spielbehaftet mit der Spule (5) gekoppelt ist, dass der Auslösemechanismus (13) relativ zu der Spule (5) von der Betriebsstellung in die Auslösestellung bewegt wird, wenn die Spule (5) im arretierten Zustand in einem vordefinierten Bereich in negativer Drehrichtung dreht.

2. Retraktor-Rückhaltesystem (1, 1') nach Anspruch 1,
**dadurch gekennzeichnet, dass** der Auslösemechanismus (13) an der Federeinheit (15) um einen exzentrischen Drehpunkt drehbar gelagert ist und durch eine Rotation um den exzentrischen Drehpunkt in die Auslösestellung bewegt wird, wenn die Spule (5) im arretierten Zustand in einem vordefinierten Bereich in negativer Drehrichtung dreht.

3. Retraktor-Rückhaltesystem (1, 1') nach einem der Ansprüche 1 oder 2,
**dadurch gekennzeichnet, dass** die Federeinheit (15) ferner dazu eingerichtet ist, eine Rückstellkraft auf den Auslösemechanismus (13) aufzubringen, um den Auslösemechanismus (13) von der Auslösestellung in die Betriebsstellung zu bringen.

4. Retraktor-Rückhaltesystem (1, 1') nach Anspruch 1,
**dadurch gekennzeichnet, dass** der Auslösemechanismus (13) ein sensorisch betätigbarer Auslösemechanismus (13) ist, welcher signalleitend mit der Spule (5) und der Arretierungseinheit (9) verbunden ist, und dazu eingerichtet ist, die Klemmeinheit (11) zu betätigen, wenn er ein Signal empfängt, das anzeigt, dass auf die Spule (5) ein Drehmoment in negativer Drehrichtung wirkt und die Spule (5) durch die Arretierungseinheit (9) arretiert ist.

5. Retraktor-Rückhaltesystem (1, 1') nach einem der vorstehenden Ansprüche,
**dadurch gekennzeichnet, dass** das Retraktor-Rückhaltesystem (1, 1') ferner eine Kopplungseinheit (17) umfasst, welche dazu eingerichtet ist, den Auslösemechanismus (13) mit der Klemmeinheit (11) zu koppeln.

6. Retraktor-Rückhaltesystem (1, 1') nach Anspruch 5,
**dadurch gekennzeichnet, dass** die Kopplungseinheit (17) ein drehbar gelagertes Kopplungsteil (29) und eine mit der Klemmeinheit (11) gekoppelte Hebeleinheit (31) umfasst,
wobei das Kopplungsteil (29) in der Auslösestellung mit dem Auslösemechanismus (13) in Eingriff bringbar und dazu eingerichtet ist, die Hebeleinheit (31) mit dem Auslösemechanismus (13) zu koppeln und in ihrer Bewegung zu führen.

7. Retraktor-Rückhaltesystem (1, 1') nach 6,
**dadurch gekennzeichnet, dass** zumindest ein Teil der Hebeleinheit (31) in einer Ebene senkrecht zur Rotationsachse bewegbar an dem Kopplungsteil (29) gelagert ist und das Kopplungsteil (29) dazu eingerichtet ist, zumindest einen Teil der Hebeleinheit (31) in eine erste Richtung zu bewegen, um die Hebeleinheit (31) mit einem mit der Spule (5) gekoppelten Zahnrad in Eingriff zu bringen, und
wobei das Zahnrad (53) dazu eingerichtet ist, zumindest einen Teil der Hebeleinheit (31) in eine zweite Richtung zu bewegen, um die Klemmeinheit (11) zu betätigen.

8. Retraktor-Rückhaltesystem (1, 1') nach Anspruch 5, 6 oder 7,
**dadurch gekennzeichnet, dass** das Retraktor-Rückhaltesystem (1, 1') ferner ein Rückstellelement (19) umfasst, welches dazu eingerichtet ist, eine Rückstellkraft auf die Kopplungseinheit (17) aufzubringen.

9. Retraktor-Rückhaltesystem (1, 1') nach einem der Ansprüche 1 bis 8,
**dadurch gekennzeichnet, dass** die Arretierungseinheit (9) ein Gehäuseteil (21) mit einer Außenverzahnung (23) und ein mit der Außenverzahnung (23) kooperierendes Arretierungsteil (25) aufweist,
wobei das Gehäuseteil (21) drehbar gelagert und mit der Spule (5) gekoppelt ist, und das Arretierungsteil (25) mit der Außenverzahnung (23) in Eingriff bringbar ist, um die Spule (5) zu arretieren.

10. Retraktor-Rückhaltesystem (1, 1') nach Anspruch 9,
**dadurch gekennzeichnet, dass** die Federeinheit (15) eine mit der Spule (5) gekoppelte Feder-Platte und ein mit dem Gehäuseteil (21) gekoppeltes Federelement umfasst.

11. Retraktor-Rückhaltesystem (1, 1') nach Anspruch 9 oder 10,
**dadurch gekennzeichnet, dass** die Arretierungseinheit (9) einen Aktuator (27) zum Betätigen des Arretierungsteils (25) umfasst, wobei der Aktuator (27) dazu eingerichtet ist, eine Rückstellkraft auf das Arretierungsteil (25) aufzubringen, um die Spule (5) freizugeben.

12. Retraktor-Rückhaltesystem (1') nach einem der vorstehenden Ansprüche,
**gekennzeichnet durch** eine Steuerungseinheit (73), welche signalleitend mit der Arretierungseinheit (9) verbindbar ist, um den Aktuator (27) zu steuern.

13. Retraktor-Rückhaltesystem (1') nach Anspruch 12,
**dadurch gekennzeichnet, dass** die Spule (5) einen Antrieb (75) aufweist, welcher signalleitend mit der Steuerungseinheit (73) verbindbar und dazu eingerichtet ist, das Gurtband (7) aufzuwickeln.

14. Retraktor-Rückhaltesystem (1, 1') nach einem der vorstehenden Ansprüche, **dadurch gekennzeichnet, dass** die Spule (5) dazu eingerichtet ist, Gurtband (7) mit einer Länge im Bereich von mindestens 3m bis 5m, vorzugsweise eine Länge von etwa 4m, aufzunehmen.

15. Verwendung eines Retraktor-Rückhaltesystems (1, 1') zur Sicherung von Rollstühlen und/oder Personen in Fahrzeugen nach einem der Ansprüche 1 bis 14.

16. Verfahren zur Sicherung von Rollstühlen und/oder Personen in Fahrzeugen mittels eines Retraktor-Rückhaltesystems (1, 1') nach einem der Ansprüche 1 bis 14, wobei das Retraktor-Rückhaltesystem (1, 1') umfasst:
- ein Gehäuse (3),
- eine in einer positiven und negativen Drehrichtung drehbar an dem Gehäuse (3) gelagerte Retraktor-Spule (5) zum Aufnehmen eines mit einem Rollstuhl koppelbaren Gurtbandes (7), wobei das Gurtband (7) durch eine Rotation der Spule (5) in der positiven Drehrichtung aufwickelbar und durch eine Rotation der Spule (5) in der negativen Drehrichtung abwickelbar ist,
- eine Arretierungseinheit (9) zum Arretieren der Spule (5) gegen eine Rotation in negativer Drehrichtung in einem Betriebszustand des Retraktor-Rückhaltesystems (1, 1'), und
- eine an dem Gehäuse angeordnete Klemmeinheit (11) zum lösbaren Festklemmen des von der Spule (5) abgewickelten Gurtes, und
- einen mit der Arretierungseinheit (9) und der Spule (5) koppelbaren Auslösemechanismus (13) zur Betätigung der Klemmeinheit (11),
das Verfahren umfassend die Schritte:
- Abwickeln des Gurtbandes (7) durch eine Rotation der Spule (5) in der negativen Drehrichtung,
- Verbinden des distalen Endes des Gurtbandes (7) mit einem Rollstuhl,
- Arretierten der Spule (5) gegen eine Rotation in negativer Drehrichtung,
- Positionieren des Rollstuhls in dem Fahrzeug,
- Aufwickeln des Gurtbandes (7) durch eine Rotation der Spule (5) in der positiven Drehrichtung,
- Betätigen der Klemmeinheit (11) durch die Auslöseeinheit, wenn auf die Spule (5) ein Drehmoment in negativer Drehrichtung wirkt und die Spule (5) durch die Arretierungseinheit (9) arretiert ist.

## Claims

1. A retractor restraint system (1, 1') for securing wheelchairs and/or people in vehicles, including:
- a housing (3),
- a retractor reel (5) mounted to the housing (3) rotatably in a positive and a negative direction of rotation for receiving a belt (7) which can be coupled to a wheelchair, wherein the belt (7) can be wound on by a rotation of the reel (5) in the positive direction of rotation and can be unwound by a rotation of the reel (5) in the negative direction of rotation,
- an arresting unit (9) for arresting the reel (5) to prevent rotation in the negative direction of rotation in an operating state of the retractor restraint system (1, 1'),
- a clamping unit (11) arranged at the housing for releasably clamping fast the belt (7) unwound from the reel (5), and
- a triggering mechanism (13) for actuation of the clamping unit (11),
wherein the triggering mechanism (13) can be coupled to the arresting unit (9) and the reel (5) in such a way that the clamping unit (11) is actuated when a torque acts on the reel (5) in the negative direction of rotation and the reel (5) is arrested by the arresting unit (9), and
wherein the triggering mechanism (13) is a mechanically actuable triggering mechanism (13) which is moveable from an operative position into a triggering position to actuate or release the clamping unit (11) respectively **characterised by** a spring unit (15) for resiliently coupling the reel (5) to the arresting unit (9) so that the reel (5) in the arrested state is rotatable in a predefined region in the negative direction of rotation,
wherein preferably the triggering mechanism (13) is coupled with play to the reel (5) in such a way that the triggering mechanism (13) is moved relative to the reel (5) from the operative position into the triggering position when the reel (5) rotates in the arrested state in a predefined region in the negative direction of rotation.

2. A retractor restraint system (1, 1') according to claim 1 **characterised in that** the triggering mechanism (13) is mounted to the spring unit (15) rotatably about an eccentric pivot and is moved by a rotation about the eccentric pivot into the triggering position when the reel (5) rotates in the arrested state in a predefined region in the negative direction of rotation.

3. A retractor restraint system (1, 1') according to claim 1 or 2, **characterised in that** the spring unit (15) is further adapted to apply a return force to the triggering mechanism (13) to move the triggering mechanism (13) from the triggering position into the operative position.

4. A retractor restraint system (1, 1') according to claim 1 **characterised in that** the triggering mechanism (13) is a sensor-actuable triggering mechanism (13) which is connected in signal-conducting relationship to the reel (5) and the arresting unit (9) and is adapted to actuate the clamping unit (11) when it receives a signal indicating that a torque is acting on the reel (5) in the negative direction of rotation and/or the reel (5) is arrested by the arresting unit (9).

5. A retractor restraint system (1, 1') according to one of the preceding claims
**characterised in that** the retractor restraint system (1, 1') further includes a coupling unit (17) adapted to couple the triggering mechanism (13) to the clamping unit (11).

6. A retractor restraint system (1, 1') according to claim 5 **characterised in that** the coupling unit (17) includes a rotatably mounted coupling portion (29) and a lever unit (31) coupled to the clamping unit (11), wherein the coupling portion (29) in the triggering position can be brought into engagement with the triggering mechanism (13) and is adapted to couple the lever unit (31) to the triggering mechanism (13) and guide it in its movement.

7. A retractor restraint system (1, 1') according to claim 6,
**characterised in that** at least a portion of the lever unit (31) is mounted to the coupling portion (29) moveably in a plane perpendicular to the axis of rotation and the coupling portion (29) is adapted to move at least a portion of the lever unit (31) in a first direction to bring the lever unit (31) into engagement with a gear coupled to the reel (5), and
wherein the gear (53) is adapted to move at least a portion of the lever unit (31) in a second direction to actuate the clamping unit (11).

8. A retractor restraint system (1, 1') according to claim 5, claim 6 or claim 7,
**characterised in that** the retractor restraint system (1 1') further includes a return element (19) adapted to apply a return force to the coupling unit (17).

9. A retractor restraint system (1, 1') according to one of claims 1 to 8, **characterised in that** the arresting unit (9) has a housing portion (21) having an external tooth arrangement (23) and an arresting portion (25) cooperating with the external tooth arrangement (23),
wherein the housing portion (21) is mounted rotatably and coupled to the reel (5) and the arresting portion (25) can be brought into engagement with the external tooth arrangement (23) to arrest the reel (5).

10. A retractor restraint system (1, 1') according to claim 9 **characterised in that** the spring unit (15) includes a spring plate coupled to the reel (5) and a spring element coupled to the housing portion (21).

11. A retractor restraint system (1, 1') according to claim 9 or claim 10, **characterised in that** the arresting unit (9) includes an actuator (27) for actuating the arresting portion (25), the actuator (27) being adapted to apply a return force to the arresting portion (25) to release the reel (5).

12. A retractor restraint system (1') according to one of the preceding claims, **characterised by** a control unit (73) which can be connected in signal-conducting relationship to the arresting unit (9) to control the actuator (27).

13. A retractor restraint system (1') according to claim 12,
**characterised in that** the reel (5) has a drive (75) which can be connected in signal-conducting relationship to the control unit (73) and is adapted to wind on the belt (7).

14. A retractor restraint system (1, 1') according to one of the preceding claims,
**characterised in that** the reel (5) is adapted to receive a belt (7) of a length in the region of at least 3m to 5m, preferably a length of about 4m.

15. Use of a retractor restraint system (1, 1') for securing wheelchairs and/or people in vehicles according to one of claims 1 to 14.

16. A method of securing wheelchairs and/or people in vehicles by means of a retractor restraint system (1, 1') according to one of claims 1 to 14, wherein the retractor restraint system (1, 1') includes:
- a housing (3),
- a retractor reel (5) mounted to the housing (3) rotatably in a positive and a negative direction of rotation for receiving a belt (7) which can be coupled to a wheelchair, wherein the belt (7) can be wound on by a rotation of the reel (5) in the positive direction of rotation and can be unwound by a rotation of the reel (5) in the negative direction of rotation,
- an arresting unit (9) for arresting the reel (5) to prevent rotation in the negative direction of rotation in an operating state of the retractor restraint system (1, 1'),
- a clamping unit (11) arranged at the housing for releasably clamping fast the belt (7) unwound from the reel (5), and
- a triggering mechanism (13) which can be coupled to the arresting unit (9) and the reel (5) for actuation of the clamping unit (11),
the method including the steps:
- unwinding the belt (7) by a rotation of the reel (5) in the negative direction of rotation,
- connecting the distal end of the belt (7) to a wheelchair,
- arresting the reel (5) to prevent rotation in the negative direction of rotation,
- positioning the wheelchair in the vehicle,
- winding the belt (7) on by a rotation of the reel (5) in the positive direction of rotation, and
- actuating the clamping unit (11) by the triggering unit when a torque acts on the reel (5) in the negative direction of rotation and the reel (5) is arrested by the arresting unit (9).

## Revendications

1. Système de retenue de rétracteur (1, 1') pour bloquer des fauteuils roulants et/ou des personnes dans des véhicules, comprenant :
- un boîtier (3),
- une bobine de rétracteur (5) montée sur le boîtier (3) de manière à pouvoir tourner dans une direction de rotation positive et négative, destinée à recevoir une sangle (7) pouvant être couplée à un fauteuil roulant, dans lequel la sangle (7) peut être enroulée par une rotation de la bobine (5) dans la direction de rotation positive et peut être déroulée par une rotation de la bobine (5) dans la direction de rotation négative,
- une unité d'arrêt (9) d'arrêt de la bobine (5) pour empêcher une rotation dans la direction de rotation négative dans un état de fonctionnement du système de retenue de rétracteur (1, 1'), et
- une unité de serrage (11) disposée sur le boîtier pour l'immobilisation amovible de la sangle (7) déroulée de la bobine (5), et
- un mécanisme de déclenchement (13) pour l'actionnement de l'unité de serrage (11),
dans lequel le mécanisme de déclenchement (13) peut être couplé de telle manière à l'unité d'arrêt (9) et à la bobine (5) que l'unité de serrage (11) est actionnée quand un couple de rotation en direction de rotation négative agit sur la bobine (5) et que la bobine (5) est arrêtée par l'unité d'arrêt (9), et
dans lequel le mécanisme de déclenchement (13) est un mécanisme de déclenchement (13) pouvant être actionné mécaniquement, lequel peut être déplacé depuis une position de fonctionnement dans une position de déclenchement pour actionner ou desserrer l'unité de serrage (11),
**caractérisé par** une unité ressort (15) pour le couplage élastique de la bobine (5) à l'unité d'arrêt (9) si bien que la bobine (5) peut être tournée dans une direction de rotation négative dans une zone prédéfinie dans l'état arrêté,
dans lequel le mécanisme de déclenchement (13) est couplé à la bobine (5) avec un jeu de telle manière que le mécanisme de déclenchement (13) est déplacé par rapport à la bobine (5) depuis la position de fonctionnement dans la position de déclenchement quand la bobine (5) tourne dans une direction de rotation négative dans une zone prédéfinie dans l'état arrêté.

2. Système de retenue de rétracteur (1, 1') selon la revendication 1,
**caractérisé en ce que** le mécanisme de déclenchement (13) est monté de manière à pouvoir tourner autour d'un point de rotation excentrique sur l'unité ressort (15) et est déplacé dans la position de déclenchement par une rotation autour du point de rotation excentrique quand la bobine (5) tourne en direction de rotation négative dans une zone prédéfinie dans l'état arrêté.

3. Système de retenue de rétracteur (1, 1') selon l'une quelconque des revendications 1 ou 2,
**caractérisé en ce que** l'unité ressort (15) est en outre mise au point pour appliquer une force de rappel sur le mécanisme de déclenchement (13) pour amener le mécanisme de déclenchement (13) depuis la position de déclenchement dans la position de fonctionnement.

4. Système de retenue de rétracteur (1, 1') selon la revendication 1,
**caractérisé en ce que** le mécanisme de déclenchement (13) est un mécanisme de déclenchement (13) pouvant être actionné par des capteurs, lequel est relié avec acheminement de signaux à la bobine (5) et à l'unité d'arrêt (9), et est mis au point pour actionner l'unité de serrage (11) quand il reçoit un signal qui indique qu'un couple de rotation en direction de rotation négative agit sur la bobine (5) et que la bobine (5) est arrêtée par l'unité d'arrêt (9).

5. Système de retenue de rétracteur (1, 1') selon l'une quelconque des revendications précédentes,
**caractérisé en ce que** le système de retenue de rétracteur (1, 1') comprend en outre une unité de couplage (17), laquelle est mise au point pour coupler le mécanisme de déclenchement (13) à l'unité de serrage (11) .

6. Système de retenue de rétracteur (1, 1') selon la revendication 5,
**caractérisé en ce que** l'unité de couplage (17) comprend une partie de couplage (29) montée de manière à pouvoir tourner et une unité de levier (31) couplée à l'unité de serrage (11),
dans lequel la partie de couplage (29) peut être amenée en prise avec le mécanisme de déclenchement (13) dans la position de déclenchement et est mise au point pour coupler l'unité de levier (31) au mécanisme de déclenchement (13) et pour la guider dans son déplacement.

7. Système de retenue de rétracteur (1, 1') selon la revendication 6,
**caractérisé en ce qu'**au moins une partie de l'unité de levier (31) est montée sur la partie de couplage (29) de manière à pouvoir être déplacée de manière perpendiculaire par rapport à l'axe de rotation dans un plan et la partie de couplage (29) est mise au point pour déplacer au moins une partie de l'unité de levier (31) dans une première direction pour amener en prise l'unité de levier (31) avec une roue dentée couplée à la bobine (5), et
dans lequel la roue dentée (53) est mise au point pour déplacer au moins une partie de l'unité de levier (31) dans une deuxième direction pour actionner l'unité de serrage (11).

8. Système de retenue de rétracteur (1, 1') selon la revendication 5, 6 ou 7,
**caractérisé en ce que** le système de retenue de rétracteur (1, 1') comprend en outre un élément de rappel (19) lequel est mis au point pour appliquer une force de rappel sur l'unité de couplage (17).

9. Système de retenue de rétracteur (1, 1') selon l'une quelconque des revendications 1 à 8,
**caractérisé en ce que** l'unité d'arrêt (9) présente une partie de boîtier (21) avec une denture extérieure (23) et une partie d'arrêt (25) coopérant avec la denture extérieure (23),
dans lequel la partie de boîtier (21) est montée de manière à pouvoir tourner et est couplée à la bobine (5), et la partie d'arrêt (25) peut être amenée en prise avec la denture extérieure (23) pour arrêter la bobine (5).

10. Système de retenue de rétracteur (1, 1') selon la revendication 9,
**caractérisé en ce que** l'unité ressort (15) comprend une plaque de ressort couplée à la bobine (5) et un élément de ressort couplé à la partie de boîtier (21).

11. Système de retenue de rétracteur (1, 1') selon la revendication 9 ou 10,
**caractérisé en ce que** l'unité d'arrêt (9) comprend un actionneur (27) pour l'actionnement de la partie d'arrêt (25), dans lequel l'actionneur (27) est mis au point pour appliquer une force de rappel sur la partie d'arrêt (25) pour dégager la bobine (5).

12. Système de retenue de rétracteur (1') selon l'une quelconque des revendications précédentes,
**caractérisé par** une unité de commande (73), laquelle peut être reliée avec acheminement de signaux à l'unité d'arrêt (9) pour commander l'actionneur (27).

13. Système de retenue de rétracteur (1') selon la revendication 12,
**caractérisé en ce que** la bobine (5) présente un entraînement (75), lequel peut être relié avec acheminement de signaux à l'unité de commande (73) et est mis au point pour enrouler la sangle (7).

14. Système de retenue de rétracteur (1, 1') selon l'une quelconque des revendications précédentes,
**caractérisé en ce que** la bobine (5) est mise au point pour recevoir la sangle (7) avec une longueur dans la plage d'au moins 3 m à 5 m, de préférence une longueur d'environ 4 m.

15. Utilisation d'un système de retenue de rétracteur (1, 1') pour le blocage de fauteuils roulants et/ou de personnes dans des véhicules selon l'une quelconque des revendications 1 à 14.

16. Procédé pour bloquer des fauteuils roulants et/ou des personnes dans des véhicules au moyen d'un système de retenue de rétracteur (1, 1') selon l'une quelconque des revendications 1 à 14, dans lequel le système de retenue de rétracteur (1, 1') comprend :
- un boîtier (3),
- une bobine de rétracteur (5) montée sur le boîtier (3) de manière à pouvoir tourner dans une direction de rotation positive et négative, destinée à la réception d'une sangle (7) pouvant être couplée à un fauteuil roulant, dans lequel la sangle (7) peut être enroulée par une rotation de la bobine (5) dans la direction de rotation positive et peut être déroulée par une rotation de la bobine (5) dans la direction de rotation négative,
- une unité d'arrêt (9) d'arrêt de la bobine (5) pour empêcher une rotation en direction de rotation négative dans un état de fonctionnement du système de retenue de rétracteur (1, 1'), et
- une unité de serrage (11) disposée sur le boîtier pour l'immobilisation amovible de la sangle déroulée de la bobine (5), et
- un mécanisme de déclenchement (13) pouvant être couplé à l'unité d'arrêt (9) et à la bobine (5) pour l'actionnement de l'unité de serrage (11),
le procédé comprenant les étapes :
- de déroulement de la sangle (7) par une rotation de la bobine (5) dans la direction de rotation négative,
- de liaison de l'extrémité distale de la sangle (7) à un fauteuil roulant,
- d'arrêt de la bobine (5) pour empêcher une rotation en direction de rotation négative,
- de positionnement du fauteuil roulant dans le véhicule,
- d'enroulement de la sangle (7) par une rotation de la bobine (5) dans la direction de rotation positive,
- d'actionnement de l'unité de serrage (11) par l'unité de déclenchement lorsqu'un couple de rotation en direction de rotation négative agit sur la bobine (5) et que la bobine (5) est arrêtée par l'unité d'arrêt (9).
